# DEMANDE DE BREVET EUROPEEN

(11) **EP 0 888 859 A1**
(43) Date de publication de la demande: **07.01.1999**
(21) Numéro de dépôt: 97870098.7
(22) Date de dépôt: 04.07.1997
(51) Int. Cl.: B29C 43/30

(54) **Procédé de fabrication de produits de revêtement de sols et produits obtenus**

(71) Demandeur: SOMMER S.A., 92748 Nanterre Cedex (FR)
(72) Inventeur: Lemoine, Alain, F-08200 Balan (FR); Roussel, Albert, L-9514 Wiltz (LU)
(74) Mandataire: Van Malderen, Michel

(57) **Abrégé**

On forme d'abord de manière aléatoire un lit d'éléments discrets de faible épaisseur et de couleur multiple par dépôt en une épaisseur supérieure à l'épaisseur individuelle de chacun des éléments discrets sur un tapis (21).

On procède ensuite à un calandrage (23) en formant une feuille (25) rendue cohérente et continue.

Dans une étape ultérieure (29, 31), on procède à une découpe de la feuille (25) en parallélépipèdes (35).

A partir de ces parallélépipèdes on forme à nouveau un lit homogène, de préférence par calandrage à l'épaisseur finale.

## Description

### OBJET DE L'INVENTION

La présente invention concerne un procédé nouveau de fabrication de produits de revêtement de sols présentant un décor nouveau et s'étend aux produits résultant de ce procédé.

### ARRIERE-PLAN TECHNOLOGIQUE

Dans le domaine des revêtements de sol synthétiques, une partie importante des produits se présente sous forme d'une feuille relativement épaisse dont le décor est construit dans la masse (produit dit "homogène")

Comparé à certains produits obtenus par impression d'un décor sur un support (généralement pourvue d'une couche de protection ou d'usure transparente), le type de produit dont le décor est construit dans la masse présente l'avantage que l'aspect extérieur de celui-ci se maintient, c'est-à-dire ne se modifie pas fondamentalement en fonction de l'usure.

En général, les produits de ce type sont fabriqués par laminage (ou calandrage) de masses colorées.

Le décor obtenu est essentiellement aléatoire et est fonction essentiellement de la répartition des couleurs dans ces masses et du procédé de laminage utilisé.

A titre d'illustration, cette technique est utilisée largement pour obtenir des produits à décor marbré.

Suivant le mode de fabrication, les décors obtenus sont "orientés" dans le sens de la fabrication, c'est-à-dire dans le sens selon lequel les masses colorées subissent le laminage. Dans le cas par exemple d'une imitation de marbre, les veines sont dirigées dans le sens du laminage.

Beaucoup d'efforts ont été mis en oeuvre pour diversifier les décors obtenus et limiter ou supprimer les orientations liées au processus de fabrication.

C'est ainsi qu'on connaît, entre autres, des procédés comportant plusieurs laminoirs et impliquant une rotation à angle droit entre deux laminoirs pour orienter le décor lors de la deuxième passe dans une autre direction que celle de la première passe.

On a également proposé des procédés d'incrustation de granulés ou d'éclats de matière pour obtenir des dessins dits granités.

Des procédés de refente de feuilles laminées dans l'épaisseur permettent également de révéler des décors moins orientés du fait que le dessin est moins déformé au coeur de la feuille.

D'autres travaux ont porté sur la mise en oeuvre de grains enrobés, ce qui permet d'obtenir des transitions de couleur très fines et bien définies.

Finalement, des techniques ont été développées pour éviter le recours à un laminage. Dans cette option, on a proposé par exemple d'assembler des chips (ou des particules) au moyen d'un liant. Certaines techniques proposent de saupoudrer les grains sur le liant, d'autres préfèrent former un lit de chips et de déposer le liant sur ce décor déjà préalablement constitué et calibré.

Toutes ces techniques ont en fait pour objectif de former un décor attractif en cherchant à éviter autant que possible de faire apparaître sur le produit obtenu le sens de fabrication rendu visible par suite de l'étirement lié au passage dans le laminoir.

### BUTS DE L'INVENTION

La présente invention vise la réalisation d'un procédé de production simple qui évite les inconvénients de l'état de la technique précité.

L'invention vise en particulier à fournir une technique offrant des possibilités nouvelles de décor sans entraîner des frais prohibitifs de production et permettant en particulier de rendre largement continue la production de revêtements de sol sous forme de lés.

Deux points sont particulièrement importants pour atteindre un résultat qui réponde aux attentes du consommateur.

La technique choisie doit impliquer la formation d'une feuille à partir d'éléments discrets (particules, paillettes ou "chips"), et la manière de préparer le mélange des couleurs et la forme et dimension de la masse subissant le calandrage, doit être choisie pour obtenir un produit de belle apparence.

Un autre facteur à prendre en considération est que l'effet du laminage ne doit pas se traduire de manière marquée dans l'apparence externe du produit obtenu et que l'aspect général obtenu doit être maintenu en cas d'usure.

Le procédé de fabrication de l'invention tient compte de ces deux critères et permet de résoudre le problème à la base de l'invention.

### ELEMENTS CARACTERISTIQUES DE LA PRESENTE INVENTION

L'invention porte sur un procédé de production d'un revêtement de sol impliquant un laminage dans lequel on forme d'abord de manière aléatoire un lit d'éléments discrets (en particulier des particules, des paillettes ou des chips) de faible épaisseur et de couleur multiple.

Ce lit qui est avantageusement disposé sur une bande transporteuse en acier est constitué par simple dépôt en une épaisseur supérieure à l'épaisseur individuelle de chacun des éléments discrets prémentionnés, généralement sous une épaisseur d'au moins environ deux fois cette dimension et de préférence environ trois fois cette dimension et est ensuite calandré.

A titre d'illustration, si l'on forme un lit de paillettes dont la dimension individuelle en épaisseur est inférieure ou égale à 2 mm, on prévoiera une quantité suffisante de matière de façon qu'après calandrage, la matière soit ramenée à une épaisseur de l'ordre de 3 mm.

Les éléments discrets peuvent être constitués de toute matière appropriée, par exemple du PVC qui est très largement utilisé pour les revêtements de sol mais également tous les produits de substitution qui ont été récemment proposés ou encore de linoleum.

Ces éléments discrets sont de préférence colorés dans la masse à l'aide des pigments habituellement utilisés, mais peuvent être aussi teintés par enrobage superficiel.

On obtient de cette manière par l'opération même du calandrage (qui peut s'effectuer entre des cylindres chauffés) une feuille rendue cohérente et continue d'une épaisseur de 3 mm dans l'exemple considéré.

Dans une étape ultérieure, on procède à une découpe de ladite feuille en parallélépipèdes, de préférence en cubes dont la hauteur est approximativement égale à l'épaisseur de la feuille obtenue après calandrage.

Par la technique qui a été utilisée pour leur production, ces parallélépipèdes possèdent nécessairement des strates de couleur différente, l'épaisseur des strates, l'alternance des couleurs étant essentiellement aléatoire.

A partir de ces parallélépipèdes, on forme un lit homogène lequel est aggloméré par compression, de préférence par calandrage à l'épaisseur finale (qui est nécessairement inférieure à l'épaisseur des cubes mis en oeuvre).

A titre d'illustration, lorsque l'épaisseur de calandrage lors de la première opération précédant la découpe est de l'ordre de 3 mm, on choisit une valeur de compression dans l'étape finale de façon à obtenir finalement une famille de l'ordre de 2 mm d'épaisseur.

Du fait que les parallélépipèdes lors de la seconde opération de compression subissent une déformation relativement faible par rapport à leur dimension initiale, le décor (et les différentes couleurs qui le constitue) n'est que peu déformé et étiré et en tous les cas ne laisse apparaître que faiblement la trace de l'opération de compression finale.

La technique décrite peut être exécutée en prévoyant qu'avant de subir l'opération de compression finale, le décor constitué par les parallélépipèdes assemblés soit formé sur un support, par exemple une toile de jute dans le cas de particules de linoleum, une feuille de PVC, de préférence une feuille de PVC stabilisée par un voile de verre notamment.

La dernière étape de compression est réalisée avantageusement dans un laminoir mais il est également possible de recourir à une presse à bandes continues (à plateaux ou à tambours) ce qui a l'avantage de ne pas étirer le décor mais entraîne la nécessité de prendre soin de créer une homogénéité accrue de répartition de la matière.

Le produit obtenu peut subir les traitements complémentaires classiques tels que application d'une couche de finition (vernis, couche d'usure etc.) généralement transparente ou le cas échéant transparente et colorée.

De même, le produit peut être pourvu au verso des couches habituelles, moussées ou non, en usage dans les produits de revêtement de sols.

### DESCRIPTION D'UNE FORME DETAILLEE DE L'INVENTION

L'invention sera décrite plus en détail en référence aux dessins annexés.

### BREVE DESCRIPTION DES DESSINS

Dans les dessins :
la figure 1 représente une installation permettant la mise en oeuvre d'une forme d'exécution préférée de l'invention;
les figures 2 et 3 représentent les types de produits qui peuvent être obtenus par cette technique;
la figure 4 représente un produit connu que l'on obtient par les techniques classiques.

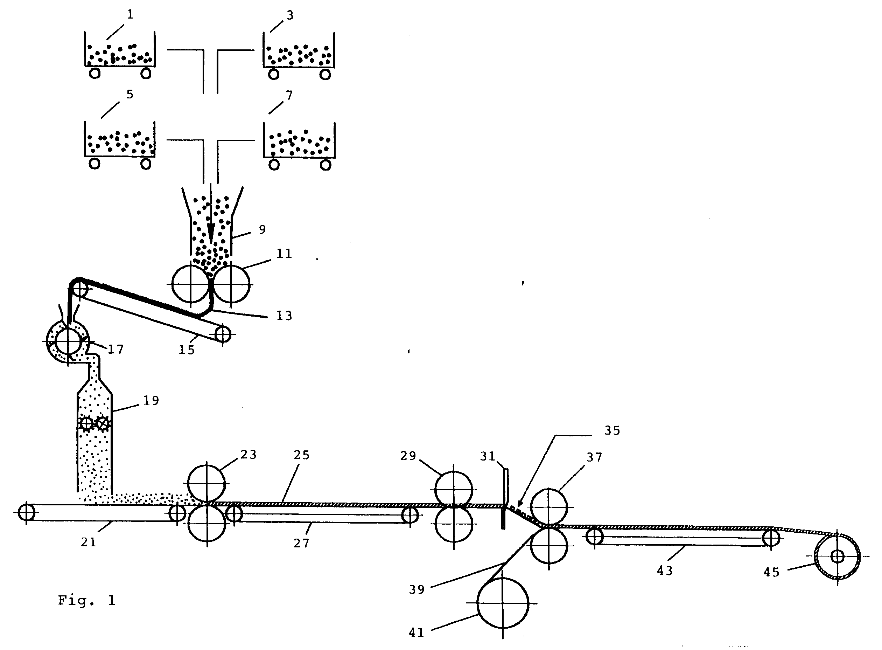

Dans la figure 1, on a représenté schématiquement une installation permettant la mise en oeuvre du procédé de l'invention.

Quatre chariots 1, 3, 5 et 7 alimentent la matière première sous forme de particules, et en particulier, de chips. Chacun de ces chips est en principe de la même nature chimique, la seule différence étant qu'ils sont de couleur différente.

Par une trémie 9 ces matières sont, en mélange, alimentées dans un laminoir 11 en formant une bande 13 qui est amenée via un transporteur 15 vers une déchiqueteuse 17.

Les produits à la sortie de la déchiqueteuse sont directement alimentés dans une saupoudreuse de particules 19.

Les particules régulièrement réparties sur une bande transporteuse 21 sont amenées vers un laminoir 23 dont elles ressortent sous forme d'une bande 25 qui est reçue sur un transporteur 27.

Un poste 29 réalise une découpe longitudinale et un poste 31 assure une découpe transversale. Les cubes 35 parviennent ensuite à un poste de laminage 37 sur support, le support 39 étant déroulé d'un poste d'alimentation 41.

A la sortie du poste de laminage 37, le produit obtenu est reçu sur un transporteur 43 et est amené finalement à un poste d'enroulement 45.

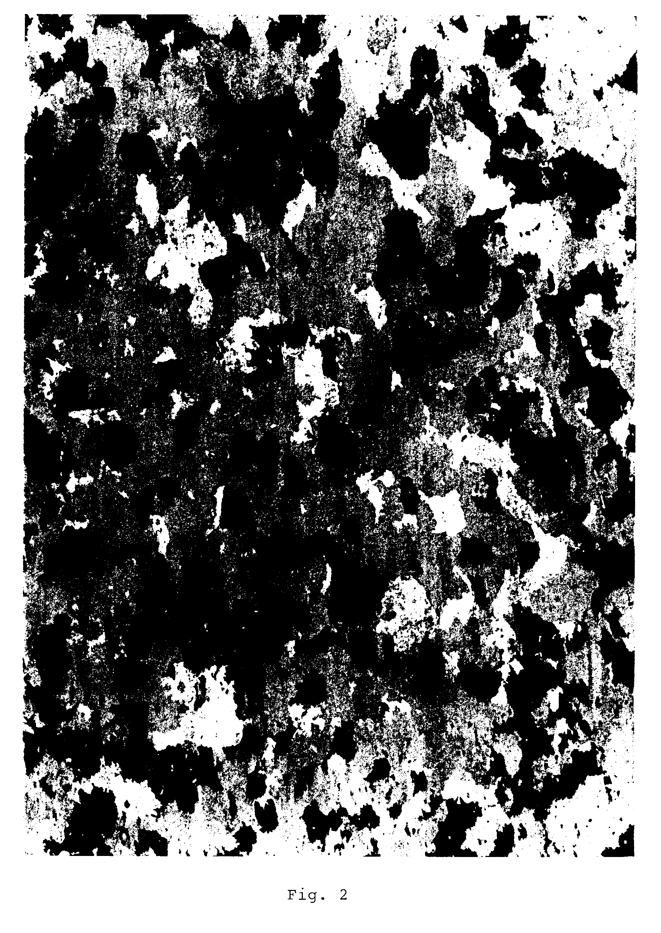

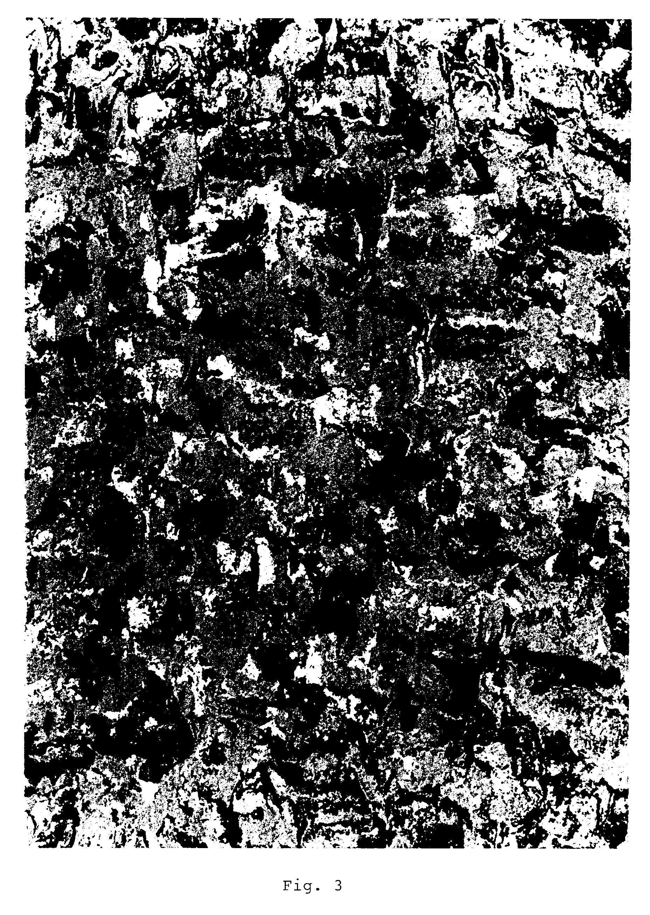

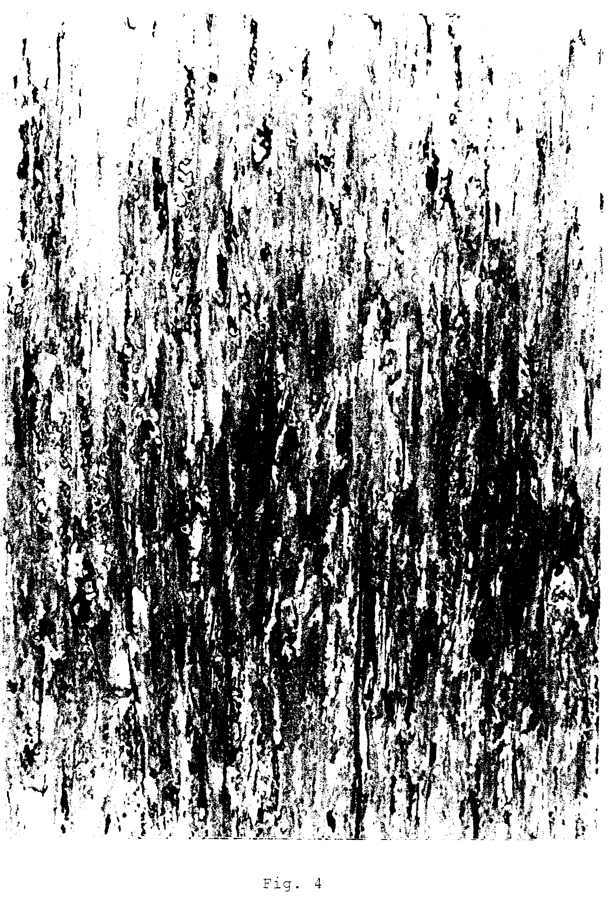

L'aspect de deux types de produits qui peuvent être obtenus par cette technique est repris dans les figures 2 et 3. On observe qu'aucun sens d'étirement n'est visible contrairement au produit classique représenté à la Fig. 4.

Bien qu'on ait décrit un type d'exécution préféré du procédé de l'invention, en particulier pour ce qui concerne l'installation qui est utilisée, il doit être bien entendu que de nombreuses variantes d'exécution restent possibles dans le cadre de l'invention.

## Revendications

1. Procédé de production d'un revêtement de sol par laminage, caractérisé en ce qu'on forme d'abord de manière aléatoire un lit d'éléments discrets (en particulier des particules, des paillettes ou des chips) de faible épaisseur et de couleur multiple par dépôt en une épaisseur supérieure à l'épaisseur individuelle de chacun des éléments discrets prémentionnés, de préférence sous une épaisseur d'au moins environ deux fois cette dimension et de préférence environ trois fois cette dimension et qu'on procède ensuite à un calandrage en formant une feuille rendue cohérente et continue et en ce que, dans une étape ultérieure, on procède à une découpe de ladite feuille en parallélépipèdes, de préférence en cubes dont la hauteur est approximativement égale à l'épaisseur de la feuille obtenue après calandrage après quoi, à partir de ces parallélépipèdes, on forme un lit homogène lequel est aggloméré par compression, de préférence par calandrage à l'épaisseur finale.

2. Procédé selon la revendication 1, caractérisé en ce qu'on forme un lit de paillettes dont la dimension individuelle en épaisseur est inférieure ou égale à 2 mm, en prévoyant une quantité suffisante de matière de façon qu'après calandrage, la matière soit ramenée à une feuille d'épaisseur de l'ordre de 3 mm et qu'on choisit une valeur de compression dans l'étape finale de façon à obtenir finalement une feuille de l'ordre de 2 mm d'épaisseur.

3. Procédé selon la revendication 1 ou 2, caractérisé en ce que les éléments discrets sont constitués par du PVC ou des produits de substitution du PVC ou encore de linoleum.

4. Procédé selon l'une quelconque des revendications précédentes, caractérisé en ce que les éléments discrets sont colorés dans la masse ou sont teintés par enrobage superficiel.

5. Procédé selon l'une quelconque des revendications précédentes, caractérisé en ce que lors de l'opération de compression finale, le décor constitué par les parallélépipèdes assemblés est formé sur un support, tel qu'une toile de jute dans le cas de particules de linoleum, une feuille de PVC, de préférence une feuille de PVC stabilisée par une voile de verre.

6. Procédé selon l'une quelconque des revendications précédentes, caractérisé en ce que l'opération de compression finale est réalisée dans un laminoir ou à l'aide d'une presse à bandes continues (à plateaux ou à tambours).

7. Procédé selon l'une quelconque des revendications précédentes, caractérisé en ce que le produit obtenu subit les traitements complémentaires classiques tels que application d'une couche de finition (vernis, couche d'usure etc.) et/ou qu'il est pourvu au verso des couches habituelles, moussées ou non.

8. Procédé selon l'une quelconque des revendications 1 à 7, caractérisé en ce qu'on forme le lit homogène final qui est aggloméré par compression sur un support.

9. Installation permettant la mise en oeuvre du procédé selon l'une quelconque des revendications 1 à 8, caractérisée en ce qu'elle comporte des moyens (1,3,5 et 7) alimentant une matière première sous forme de particules de couleur différente vers un laminoir (11) qui forme une bande (13), un transporteur (15) déplaçant la bande (13) vers une déchiqueteuse (17), une saupoudreuse de particules (19) recevant les produits déchiquetés en les répartissant sur une bande transporteuse (21) un laminoir (23) alimenté par ladite bande transporteuse (21) et servant à former une bande (25), un poste (29) qui réalise une découpe longitudinale et un poste (31) qui assure une découpe transversale de cette bande (25) afin d'obtenir des cubes (35) et un poste de laminage (37) sur un support (39) alimenté par lesdits cubes (35), le support (39) étant déroulé d'un poste d'alimentation (41).

10. Produit obtenu par le procédé d'une quelconque des revendications 1 à 8 ou à l'aide de l'installation de la revendication 9, caractérisé en ce que son apparence extérieur ne laisse pratiquement pas apparaître le fait qu'il a subi au moins une opération de laminage.
